# FASCICULE DE BREVET EUROPEEN

(11) **EP 0 607 133 B1**
(45) Date de publication et mention de la délivrance du brevet: **23.08.1995**
(21) Numéro de dépôt: 91917847.5
(22) Date de dépôt: 07.10.1991
(51) Int. Cl.: G11C 5/00, G11C 8/04

(54) **CARTE A MEMOIRE**
SPEICHERKARTE.
MEMORY CARD

(43) Date de publication de la demande: 27.07.1994
(73) Titulaire: SKORSKI, Serge, F-01250 Tossiat (FR)
(72) Inventeur: SKORSKI, Serge, F-01250 Tossiat (FR)
(74) Mandataire: Bratel, Gérard
(86) Numéro de dépôt international: FR9100785
(87) Numéro de publication internationale: WO9307620

(56) Documents cités:
- WO-A-89/00730
- PATENT ABSTRACTS OF JAPAN vol. 12, no. 23 (P-658)23 Janvier 1988
- PATENT ABSTRACTS OF JAPAN vol. 6, no. 148 (P-133)7 Août 1982
- PATENT ABSTRACTS OF JAPAN vol. 13, no. 345 (P-909)3 Août 1989
- PATENT ABSTRACTS OF JAPAN vol. 14, no. 25 (P-991)18 Janvier 1990
- PATENT ABSTRACTS OF JAPAN vol. 15, no. 175 (E-1063)2 Mai 1991

## Description

La présente invention concerne de manière générale une carte à mémoire portative et indépendante destinée au stockage de masse d'information et ayant les dimensions d'une carte de crédit.

On connait la carte téléphonique dite télécarte, qui contient en fait sur une puce de silicium une logique cablée permettant de griller les quelques cases mémoires correspondant aux unités téléphoniques prépayées.

Une autre carte à mémoire, dite carte à puce, existe actuellement, dont la conception est basée essentiellement sur une puce à microprocesseur (CPU), apportant la sécurité ou la confidentialité à un stockage limité de données, représentant, soit des informations fiduciaires (cartes de paiement), soit des informations personnelles (dossier médical, dossier universitaire), soit encore un codage des autorisations d'accès à certains lieux, soit encore une combinaison de ces informations. L'accès aux données se fait en mode série sur une seule ligne et par l'intermédiaire du microprocesseur, à l'aide d'un protocole complexe de transmission de données.
La présence sur la puce de silicium du microprocesseur nécessite de la place et ne permet pas l'adjonction d'une très grande capacité de mémoire.

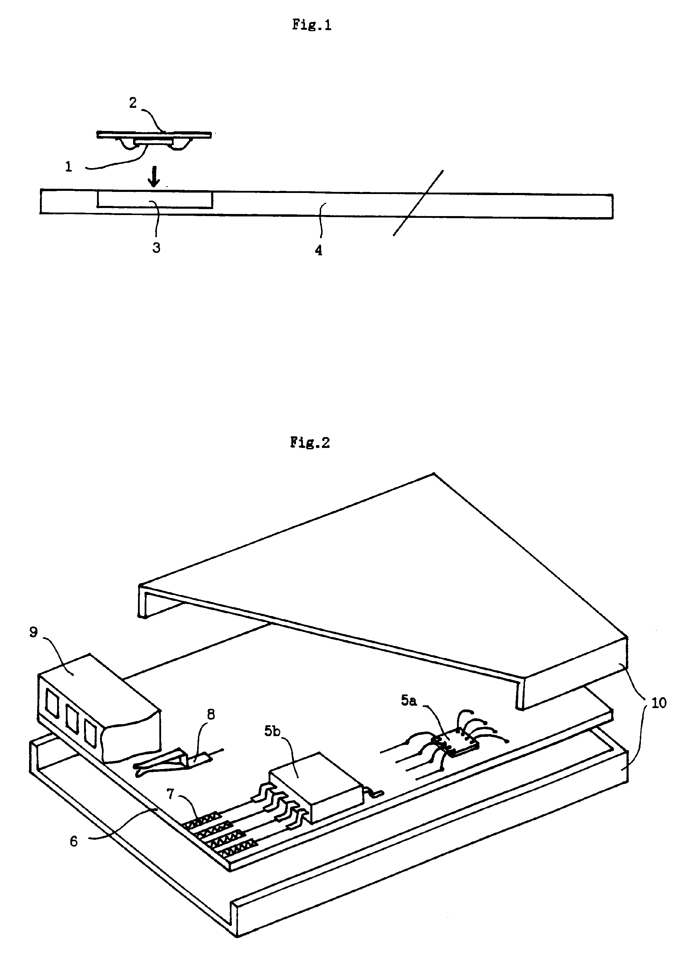

La figure 1 montre la constitution des deux types de cartes précédantes. Elles utilisent, pour leur liaison avec les organes utilisateurs, un ensemble de contacts de type ISO (Norme ISO 7816-2) dont le nombre est réduit à 8 .Ceci permet de réaliser ces cartes simplement, en collant et en connectant la puce (1) au dos d'un module de contacts de petite taille (2) réalisé par dépot d'une surface conductrice sur un film, puis en insérant ce module dans un logement (3) prévu à cet effet dans l'épaisseur de 0.76 mm du plastique de la carte (4).

Ce type de réalisation est très économique et rend possible une diffusion à grande échelle.

Un autre type de carte à mémoire existe, et consiste en un conditionnement particulier d'un ou de plusieurs composants mémoire standards connectés sur un circuit imprimé rigide, sur lequel est également raccordé un connecteur et qui est ensuite inséré dans un support plastique au format dit de carte de crédit. Le connecteur possède un grand nombre de contacts,en particulier pour les lignes d'adresse dont le nombre augmente avec la capacité mémoire de la carte.

Ce dernier type de carte à mémoire est surtout utilisé sur des imprimantes comme support de polices de caractères supplémentaires ou sur des microordinateurs de poche en remplacement des unités de disques magnétiques qui sont montés habituellement sur les microordinateurs dit portables.

La figure 2 montre la constitution de ce type de cartes. Les puces constituant la mémoire sont fixées nues (5a) (technologie chip on board) ou en boitier (5b) et connectées aux pistes d'un circuit imprimé (6) généralement réalisé en verre époxy. La transmission des données est réalisée par l'intermédiaire d'un connecteur disposé habituellement en extrémité du circuit imprimé et constitué soit par des contacts (7) réalisés par dépot d'une surface conductrice déposée directement sur le circuit imprimé, soit par un ensemble de contacts mécaniques (8) montés préalablement dans un boitier plastique (9) lequel est rapporté à l'extrémité du circuit imprimé, les contacts étant soudés aux pistes du circuit.
Le circuit imprimé est ensuite monté en sandwich entre deux demi boitiers plastiques (10) pour constituer la carte à mémoire.
Cette technologie est coûteuse par rapport à la technologie exposée précédemment et ne permet pas une grande diffusion de ces cartes à mémoire ailleurs que dans le domaine professionnel.

Les principales raisons nécessitant ce mode d'élaboration sont:
- la nécessité d'assembler plusieurs puces de moindre capacité ce qui utilise une grande surface,
- le grand nombre de contacts utilisés pour les mémoires de grande capacité et qui mobilisent sur un des cotés de la carte un espace linéaire important.

En effet la quantité de mémoire prévue dans ces cartes mémoire est souvent de 256 kilooctets à plusieurs mégaoctets.Cette taille mémoire nécessite dans le cas d'un adressage aléatoire, au minimum 18 lignes d'adressage ce qui implique en ajoutant 8 lignes de données et les 4 ou 5 lignes de sélection de boitier, de lecture/écriture, de masse et d'alimentation, au moins 32 lignes de connections électriques(pour 256 koctets).
Avec l'acroissement des capacités mémoires par puce la surface de circuit nécessaire va diminuer et il ne reste plus que l'obstacle du nombre élevé de contacts.

L'objet de la présente invention est de lever ce dernier obstacle pour permettre la réalisation de cartes à mémoire de grande capacité diffusables en grand public grâce à leur réalisation par la première technologie.

Pour mettre en oeuvre l'invention on se propose d'utiliser, une particularité de l'utilisation des données contenues dans ce type de cartes à mémoire.

En effet ces cartes à mémoire sont utilisées en mémoire de masse et leur contenu est transféré lors de l'utilisation dans les mémoires vives de l'appareil utilisateur. Pour l'utilisation dans les microordinateurs de poche les éditeurs ont créé des programmes dérivés de ceux qui permettent la gestion des fichiers sur disques magnétiques de façon à ce que les cartes soit vue comme telles par le système d'exploitation de l'appareil utilisateur.

Or, dans tous les cas, ces transferts de données vers les mémoires vives de l'appareil utilisateur sont réalisés de façon séquentielle octet après octet ou mot après mot.

Le document Japonais JP-A-30 038 985 divulguant toutes les caracteristiques du preambule de la revendication 1 a tenu compte de cette caractéristique.

En effet il prévoit de partager l'adresse de la mémoire en une partie haute et une partie basse chaque partie étant commandée par le contenu d'un compteur et le compteur relatif à la partie basse de l'adresse pouvant être incrémenté par les impulsions d'une horloge pour augmenter l'adresse de 1 à chaque impulsion et réaliser ainsi un accès séquentiel aux données. Ceci permet de supprimer les contacts d'adressage relatifs à la partie basse de l'adresse et d'augmenter ainsi la fiabilité des cartes utilisant ce procédé. Ce document conserve toutefois un bus d'adresse pour entrer dans la mémoire la partie haute de l'adresse. Il ne permet donc pas de rendre le nombre de contacts d'adressage indépendant de la capacité mémoire et ne permet pas non plus l'utilisation de la technologie de fabrication décrite plus haut. En outre il ne prévoit- en particulier sur les figures - aucun moyen de faire un accès séquentiel en sens inverse puisque seul un contact de remise à zéro est prévu pour le compteur d'adresse basse. Ceci oblige à incrémenter de nouveau pour réaliser un déplacement d'adresse important dans le cas où l'on veut à l'origine faire un petit déplacement d'adresse en sens inverse.

L'architecture proposée pour l'invention utilise complètement la particularité de l'accès séquentiel aux données, ce qui permet de s'affranchir entièrement du bus d'adresse à nombreux contacts nécessaire pour un accès aléatoire et permet un accès séquentiel bidirectionnel.

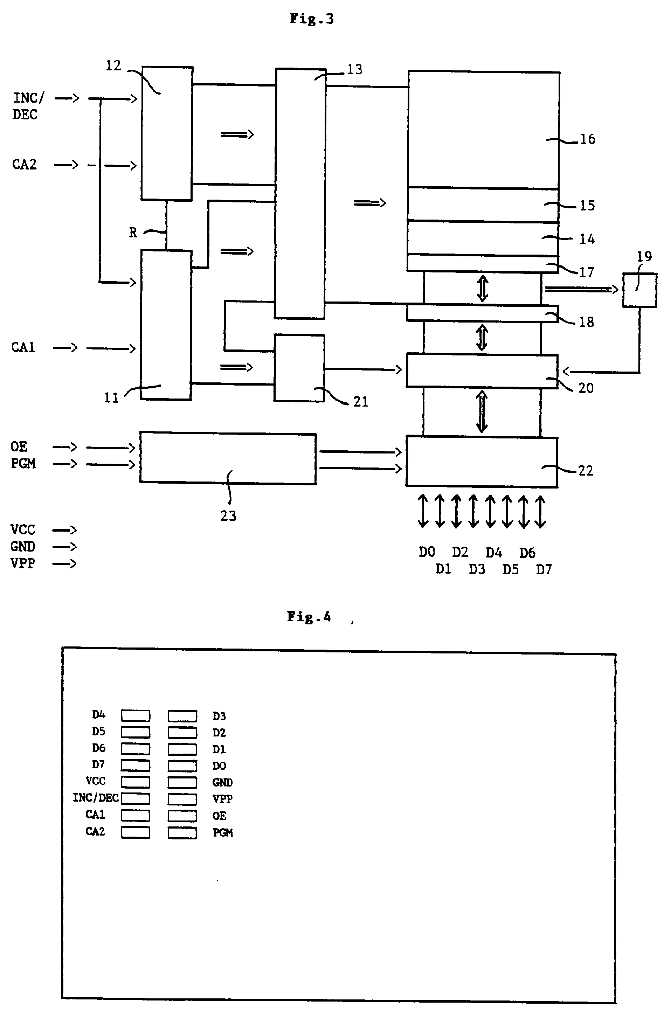

La figure 3 montre l'architecture interne de l'invention.

Le système d'adressage de l'invention, est constitué de deux compteurs décompteurs, intégrés au composant mémoire, 1 de 8 à 16 bits (11) et 1 de 10 à 18 bits (12), placés en parallèle, reliés par la ligne de retenue (R), et recevant des impulsions de l'appareil utilisateur, chacun par une ligne. L'envoi d'une impulsion au compteur de 8 à 16 bits, modifie l'adresse de 1. L'envoi d'une impulsion au compteur de 10 à 18 bits, modifie l'adresse de 255 à 4096. L'un ou l'autre des compteurs peuvent être incrémentés ou décrémentés séparément, suivant le niveau logique d'une troisième ligne. Le décodage du contenu des compteurs par le décodeur (13), permet l'adressage de l'octet recherché qui peut être retrouvé rapidement. En effet les fréquences utilisées couramment (12 MHz) permettent des taux de transfert élevés (12 Mo/s) et un déplacement d'adresse de 1 méga octets en quelques millisecondes.

Tout l'adressage des octets contenus dans la carte à mémoire est donc réalisé à l'aide des trois lignes suivantes:
- compteur adresse 1 CA1
- compteur adresse 2 CA2
- incrémentation/décrémentation INC/DEC

Les autres lignes de contact de la carte sont:
- données D0 - D7
- alimentation électrique de la carte VCC
- masse GND
- commande de lecture OE
- programmation en écriture PGM
- alimentation d'écriture VPP

Les deux dernières lignes sont prévues car la mémoire de la carte est constituéé partiellement d'une mémoire programmable et d'une mémoire programmable et effaçable électriquement. La mémoire programmable (14) permet de stocker des informations concernant le type de configuration interne (taille des compteurs décompteurs, taille de la mémoire...) et le mode d'utilisation de la carte. La mémoire programmable et effaçable électriquement (15) permet de stocker les adresses des dernières mémoires consultées ou écrites lors de la dernière utilisation. Le complément de la mémoire (16), destiné à stocker du texte, des images ou des programmes, peut être de l'un ou de l'autre type.

On voit donc que le connecteur de la carte à mémoire objet de l'invention est limité à 16 contacts, quelle que soit la taille mémoire jusqu'à 268 mégaoctets.

Une variante de réalisation permet de réduire ce nombre de lignes à 10, en transmettant les 8 bits de données en série sur une seule ligne gràce à un registre à décalage. Cette méthode est toutefois moins performante et nécessite une horloge, et donc une ligne de synchronisation.

L'invention telle que décrite précédemment peut donc facilement être mise en oeuvre suivant la technologie exposée en premier et être utilisée, outre la diffusion de logiciels, pour la diffusion d'applications grand public telle que jeux électroniques ou livres sous forme électronique, la lecture étant faite sur un appareil muni d'un écran à cristaux liquides.

Les données mémorisées dans la carte peuvent nécessiter d'être protégées, et les éditeurs des logiciels, des jeux ou livres diffusés sous cette forme peuvent souhaiter limiter le nombre d'utilisateurs du même ouvrage. Pour cela l'invention peut être pourvue de 2 registres de code, contenant chacun 8 octets accessibles seulement en écriture. L'un d'eux (17) est configuré définitivement à l'aide des codes ASCII d'un mot de passe, choisi par l'acheteur de l'ouvrage au moment de l'achat de la carte ou par l'utilisateur au premier usage. L'autre registre (18), constitué d'une mémoire RAM non permanente, est configuré lors de chaque utilisation de la carte. La comparaison des deux registres de code, bit à bit, par un comparateur (19), réalisé par un simple système de portes AND ou NAND, autorise l'accès à la zone mémoire contenant les données à utiliser, grâce à un verrou (20), commandé par un décodeur (21) qui détermine les mémoires à verrouiller. La sortie ou l'entrée des données est réalisée à travers un buffer (22), commandé lui même par une logique de lecture et de programmation (23).

L'architecture de la carte ayant été expliquée la figure 4 montre une configuration possible des contacts de la carte. Cette configuration correspond aux deux positions de contacts décrites dans la norme ISO 7816-2 d'octobre 1988 utilisées simultanément.

D'autre variantes de connecteurs peuvent être imaginées sans sortir du champ de la présente invention, et le demandeur se réserve l'exclusivité, de toute réalisation redevable des revendications ci-après.

## Revendications

1. Carte à mémoire électronique portative et indépendante destinée à être utilisée dans un appareil de lecture ou d'écriture laquelle carte contient, intégrés au composant mémoire et en vue de l'adressage de cette mémoire par décodage de leur contenu, deux compteurs-décompteurs (11,12), reliés par une ligne de retenue (R), un premier compteur-décompteur (11) permettant de déterminer la partie basse de l'adresse et un deuxième compteur-décompteur (12) permettant de déterminer la partie haute de l'adresse, lesquels compteurs-décompteurs recoivent des signaux électriques par trois contacts du connecteur, dont un contact (CA1) qui transmet des impulsions au premier compteur-décompteur (11) pour modifier l'adresse de 1 à chaque impulsion, la carte à mémoire étant caractérisée en ce que elle comprend :
- un deuxième contact du connecteur (CA2) qui transmet des impulsions au deuxième compteur-décompteur (12) pour, à chaque impulsion, modifier l'adresse du nombre maximum contenu dans le premier compteur-décompteur (11)
- le troisième contact du connecteur (INC/DEC) qui transmet aux deux compteurs-décompteurs un signal dont le niveau logique commande l'incrémentation ou la décrémentation des deux compteurs-décompteurs (11,12) par les impulsions.

2. Carte à mémoire électronique portative et indépendante selon la revendication 1 caractérisée en ce que son connecteur comprend comme autres contacts :
- 8 contacts de données (D0 à D7)
- 1 contact d'alimentation électrique (VCC)
- 1 contact de masse électrique (GND)
- 1 contact de commande de lecture (OE)
- 1 contact de commande de programmation en écriture (PGM)
- 1 contact d' alimentation d'écriture (VPP)

3. Carte à mémoire électronique portative et indépendante selon les revendications 1 et 2 caractérisée en ce qu'elle est munie d'un ensemble de 16 contacts (CA1,CA2,INC/DEC,D0 à D7,VCC,GND,OE,PGM,VPP) disposés selon deux rangées de 8 contacts (Figure 4).

4. Carte à mémoire électronique portative et indépendante selon les revendications 1, 2 ou 3 caractérisée en ce que :
- elle inclut une mémoire programmable consultable pour mémoriser le type de configuration interne et la méthode d'utilisation de la carte.

5. Carte à mémoire électronique portative et indépendante selon les revendications 1, 2, 3 ou 4 caractérisée en ce que :
- elle inclut une mémoire effaçable et reprogrammable électriquement pour mémoriser l'adresse de la dernière donnée consultée ou écrite lors de la dernière utilisation de la carte.

6. Carte à mémoire électronique portative et indépendante selon les revendications 1, 2, 3, 4 ou 5 caractérisée en ce que :
- elle inclut une mémoire programmable électriquement pour la mémorisation de texte, d'images ou de données de programme.

7. Carte à mémoire électronique portative et indépendante selon les revendications 1, 2, 3, 4, 5 ou 6 caractérisée en ce que :
- elle inclut une mémoire programmable et effaçable électriquement pour la mémorisation de texte, d'images ou de données de programme.

## Patentansprüche

1. Tragbare, unabhängige Speicherkarte zur Benutzung in einem Lesegerät oder Schreibgerät, die zwei Zähler (Aufwärtszähler, Abwärtszähler) (11, 12) enthält, die in den Speicher integriert sind und die durch Decodieren ihres Inhalts zum Adressieren des Speichers dienen, die über eine Halteleitung (R) miteinander verbunden sind, wobei ein erster Zähler (11) den unteren Teil der Adresse zu bestimmen gestattet und ein zweiter Zähler (12) den oberen Teil der Adresse, wobei die Zähler über drei Kontakte des Verbinders elektrische Signale erhalten, von denen ein Kontakt (CA1) Impulse an den ersten Zähler (11) überträgt, um die Adresse bei jedem Impuls um 1 zu ändern,
**dadurch gekennzeichnet,**
- daß die Speicherkarte einen zweiten Kontakt (CA2) des Verbinders aufweist, der Impulse an den zweiten Zähler (12) überträgt, um bei jedem Impuls die Adresse um die größte Zahl, die im ersten Zähler (11) enthalten ist, zu ändern und
- daß der dritte Kontakt (IND/DEC) des Verbinders an beide Zähler ein Signal überträgt, dessen logisches Niveau die Zunahme oder die Abnahme der beiden Zähler (11, 12) durch Impulse steuert.

2. Speicherkarte nach Anspruch 1,
**dadurch gekennzeichnet,**
daß der Verbinder als weitere Kontakte aufweist:
- acht Datenkontakte (D0 - D7),
- einen Kontakt (VCC) zur Stromversorgung,
- einen elektrischen Massenkontakt (GND),
- einen Lesesteuerungskontakt (OE),
- einen Steuerungskontakt zum Programmieren beim Schreiben (PGM),
- einen Stromversorgungskontakt zum Schreiben (VPP).

3. Speicherkarte nach Anspruch 1 und 2,
**dadurch gekennzeichnet**,
daß sie sechzehn Kontakte (CA1, CA2, IND/DEC, DO - D7, VCC, GND, OE, PGM, VPP) aufweist, die in zwei Reihen zu acht Kontakten angeordnet sind (Fig. 4).

4. Speicherkarte nach einem der Ansprüche 1 - 3,
**dadurch gekennzeichnet,**
daß ein programmierbarer, ansprechbarer Speicher vorgesehen ist, um den internen Konfigurationstyp sowie das Verfahren zur Verwendung der Karte zu speichern.

5. Speicherkarte nach einem der Ansprüche 1 - 4,
**dadurch gekennzeichnet,**
daß ein elektrisch löschbarer und wiederprogrammierbarer Speicher vorgesehen ist, um die Adresse der zuletzt angesprochenen oder geschriebenen Daten bei der letzten Verwendung der Karte zu speichern.

6. Speicherkarte nach einem der Ansprüche 1 - 5,
**dadurch gekennzeichnet,**
daß ein elektrisch programmierbarer Speicher zum Speichern von Texten, Bildern oder Programmdaten vorgesehen ist.

7. Speicherkarte nach einem der Ansprüche 1 - 6,
**dadurch gekennzeichnet,**
daß ein elektrisch programmierbarer und löschbarer Speicher zum Speichern von Texten, Bildern oder Programmdaten vorgesehen ist.

## Claims

1. An independent and portable electronic memory card intended to be used in a reading or writing apparatus, the card containing integrated in its memory element and serving to address this memory by decoding their contents two up/down counters (11, 12) interconnected by a holding line (R) and receiving electrical signals by three contacts of the connector, a first up/down counter (11) for determining the low region of the address and a second up/down counter (12) for determining the high region of the address, these up/down counters receiving signals through three connector contacts of which one contact (CA1) transmits pulses to the first up/down counter (11) for modifying the address by 1 at each pulse, the memory card being characterized in that it comprises
- a second connector contact (CA2) transmitting pulses to the second up/down counter (12) for at each pulse modifying the address by the maximum number contained in the first up/down counter (11),
- a third connector contact (INC/DEC) transmitting a signal whose logical level orders the incrementing or decrementing of the two counters (11 and 12) by pulses.

2. The independent and portable memory card according to claim 1 characterized in that its connector has as further contacts
- eight data contacts (D0 to D7),
- one electrical supply contact (VCC),
- one ground contact (GND),
- one read-order contact (OE),
- one program/writing-order contact (PGM),
- one writing supply contact (VPP).

3. The independent and portable memory card according to claims 1 and 2 characterized in that it is provided with an array of 16 contacts (CA1, CA2, INC/DEC, D0 to D7, VCC, GND, OE, PGM, VPP) set up in two rows of eight contacts (Fig. 4).

4. The independent and portable memory card according to claims 1, 2, or 3, characterized in that:
- it includes a consultable programmable memory for recording the type of internal configuration and the method of using the card.

5. The independent and portable memory card according to claims 1, 2, 3, or 4, characterized in that:
- it includes an electrically erasable and reprogrammable memory for recording the address of the last data read or written as of the last use of the card.

6. The independent and portable memory card according to claims 1, 2, 3, 4, or 5, characterized in that:
- it includes an electrically programmable memory for recording text, images, or programming data.

7. The independent and portable memory card according to claims 1, 2, 3, 4, 5, or 6, characterized in that:
- it includes an electrically programmable and erasable memory for recording text, images, or programming data.
